Europäisches Patentamt

European Patent Office

Office européen des brevets

(11) Veröffentlichungsnummer : **0 100 541**
**B1**

(12) **EUROPÄISCHE PATENTSCHRIFT**

(45) Veröffentlichungstag der Patentschrift :
**30.12.86**

(21) Anmeldenummer : **83107514.8**

(22) Anmeldetag : **29.07.83**

(51) Int. Cl.⁴ : **H 04 B   3/23**

(54) **Verfahren zur Darstellung der Koeffizienten eines Echokompensators.**

(30) Priorität : **02.08.82 DE 3228786**

(43) Veröffentlichungstag der Anmeldung :
**15.02.84 Patentblatt 84/07**

(45) Bekanntmachung des Hinweises auf die Patenterteilung : **30.12.86 Patentblatt 86/52**

(84) Benannte Vertragsstaaten :
**AT CH DE GB IT LI**

(56) Entgegenhaltungen :
**GB-A- 2 050 127**
**US-A- 4 037 160**

(73) Patentinhaber : **Siemens Aktiengesellschaft Berlin und München**
**Wittelsbacherplatz 2**
**D-8000 München 2 (DE)**

(72) Erfinder : **Müller, Eugen, Dr.**
**Birgweg 8**
**D-8012 Hohenschäftlarn (DE)**
Erfinder : **Sontheim, Hans, Ing.grad.**
**Alpspitzstrasse 14**
**D-8133 Feldafing (DE)**
Erfinder : **Stummer, Baldur, Dipl.-Ing.**
**Wilhelm-Kuhnert-Strasse 21**
**D-8000 München 90 (DE)**

Jouve, 18, rue St-Denis, 75001 Paris, France

## Beschreibung

Die Erfindung betrifft ein Verfahren zur Darstellung der Koeffizienten eines Echokompensators, der für die Verarbeitung zeitdiskreter Signale vorgesehen ist und bei dem jeder der Koeffizienten einen Abtastwert der Impulsantwort des Echoweges darstellt.

Bekanntlich treten bei der Übertragung digitaler Signale unter anderem auch solche Störungen auf, die auf das Vorhandensein von Echos zurückzuführen sind. Zur Beseitigung dieser Störungen werden deshalb sogenannte adaptive Echokompensatoren vorgesehen, die wiederum mit Hilfe von geeigneten Signalen eingestellt werden müssen. Bei dieser Einstellung werden die Koeffizienten eines solchen Echokompensators mit Hilfe von geeigneten Korrekturalgorithmen adaptiv nachgestellt, wie z. B. in GB-A-2 050 127 beschrieben. Auch ist zu berücksichtigen, daß jeder dieser Koeffizienten einen Abtastwert der Impulsantwort des Echoweges darstellt. Der Einstellvorgang ist somit ein Optimierungsvorgang und kann deshalb nur in einer gewissen Mindestzeit bewältigt werden, wenn nicht andererseits der schaltungstechnische Aufwand sehr groß werden soll.

In der Praxis hat man beispielsweise damit zu rechnen, daß die die einzelnen Koeffizienten darstellenden Schaltelemente in einer zufälligen Stellung verbleiben, die bei einem jeweiligen neuen Einschaltvorgang optimiert werden muß. Die Dauer dieses Einstellvorganges kann durch grob falsch eingestellte Koeffizienten erheblich verlängert werden. Auch erforden bei digitaler Signalverarbeitung die einzelnen Koeffizienten Speicherplätze, d. h. also einen schaltungstechnischen Aufwand, so daß man einerseits den Zeitaufwand für die Einstellung bei der Inbetriebnahme und andererseits den schaltungstechnischen Aufwand solcher Echokompensatoren möglichst gering halten will.

Aufgabe der Erfindung ist es deshalb, eine Möglichkeit zur Begrenzung der Maximalwerte der Koeffizienten eines Echokompensators anzugeben, bei der einerseits die Koeffizientenwerte an die bei einem Kabel maximal auftretenden Echoamplituden (Kabeldämpfung pro Laufzeit) angepaßt sind, und bei der andererseits auch der schaltungstechnische Aufwand möglichst gering bleibt.

Für das einleitend genannte Verfahren wird diese Aufgabe gemäß der Erfindung in der Weise gelöst, daß die Maximalwerte dieser Koeffizienten mit zunehmender Echolaufzeit in ihrer Amplitude entsprechend einer damit verbundenen größeren Kabeldämpfung abgesenkt werden.

Eine vorteilhafte Weiterbildung ist im Unteranspruch angegeben.

Bei dieser Weiterbildung wird nur eine digitale Signalverarbeitung betrachtet, wobei die Koeffizienten im Binärsystem dargestellt sind. Diese Weiterbildung hat den Vorteil, daß z. B. keine zusätzlichen Multiplizierer im Echokompensator verwendet werden müssen, da die Abstufung der Koeffizienten durch bekannte Verschiebeoperationen dargestellt werden kann.

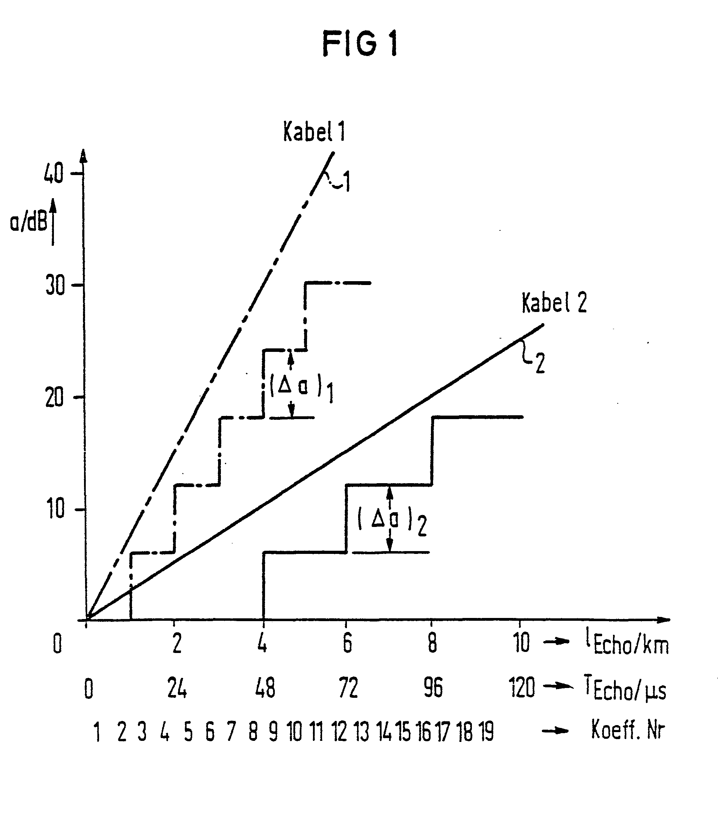

Anhand der beigefügten Fig. 1 wird nachstehend die Erfindung noch näher erläutert, in der die Dämpfung a des Echosignales durch verschiedene Kabel und mögliche Abstufungen $\Delta$a für das Kompensationssignal dargestellt sind. Wie bereits erwähnt, ist in Fig. 1 auf der Ordinate eines rechtwinkligen Koordinatensystems die Dämpfung a in dB aufgetragen, während auf der Abszisse mit drei verschiedenen Maßstäben die Länge $l_{Echo}$/km, dann die Laufzeit $T_{Echo}$/$\mu$s und die Koeffizienten-Nummer angegeben sind. Zu erkennen ist der strichpunktiert gezeichnete Verlauf für ein Kabel 1 und dazugehörig die strichpunktiert gezeichnete Abstufung $(\Delta a)_1$ sowie der ausgezogen gezeichnete Verlauf für ein Kabel 2 und dazu entsprechend die Abstufung $(\Delta a)_2$ für ein Kabel 2.

Bei der Erfindung wird nun u. a. von der Überlegung ausgegangen, daß die Echodämpfung $a_{Echo}$ umso kleiner wird, je kleiner die Laufzeit $T_{Echo}$ wird und je kleiner somit die Kabellänge $l_{Echo}$ wird, wobei unter der Kabellänge $l_{Echo}$ diejenige Kabellänge zu verstehen ist, die das Echosignal tatsächlich durchläuft. Dabei ist noch folgendes zu berücksichtigen.

Bei Echokompensatoren hängt die erforderliche Amplitude des Kompensationssignals von der Dämpfung ab, mit der die Echos abgeschwächt werden. Es wird eine Methode angegeben, die Nutzen aus der Tatsache zieht, daß Echos mit größerer Echolaufzeit in ihrer Amplitude stärker gedämpft sind als Echokomponenten mit geringer Echolaufzeit.

Es wird deshalb eine Möglichkeit zur Absenkung der Maximalwerte der Koeffizienten eines Echokompensators angegeben ; eine solche Absenkung wurde bislang nicht vorgenommen.

Bei Berücksichtigung der Dämpfung der Echos abhängig von der Echolaufzeit $T_{Echo}$ können die Maximalwerte der Koeffizienten abgesenkt werden. Fig. 1 zeigt typische Dämpfungsverläufe abhängig von $T_{Echo}$ bzw. von $l_{Echo}$ (der Kabellänge die ein Echo mit $T_{Echo}$ durchlaufen muß) und zulässige Abstufungen der Koeffizientenmaximalwerte für verschiedene Kabeltypen.

Die Stufenhöhe $\Delta$a wird zweckmäßig in ganzzahligen negativen Zweierpotenzen

$$\Delta a = k \cdot 20 \log (1/2) \approx - k \cdot 6 \text{ dB} \quad (k = 0, 1, 2, ...)$$

ausgeführt, um den Aufwand bei binärer Verarbeitung zu reduzieren. Die Realisierung erfolgt durch Verschiebung der binär dargestellten Amplitudenwerte um k Bit. Aus der vorgeschlagenen Absenkung der Koeffizientenmaximalwerte ergeben sich folgende Vorteile :

Beim Einschalten kann sich, falls eine automatische Rückstellung der Koeffizienten nicht vorgesehen wird, durch zufällig eingestellte Koeffizientenwerte nur ein kleinerer Amplitudenfehler des Kompensationssignals einstellen, was sich in einer reduzierten Einlaufzeit positiv bemerkbar macht.

Der für die digitale Verarbeitung erforderliche Aufwand, wie z. B. Koeffizientenspeicher, Breite der Teilakkumulatoren, Zahl der erforderlichen Überlaufbit, kann reduziert werden.

Ausgangspunkt für das erfindungsgemäße Verfahren ist also der Kabeltyp mit der geringsten Dämpfung pro Laufzeit, für den das Übertragungssystem entworfen werden soll.

## Patentansprüche

1. Verfahren zur Darstellung der Koeffizienten eines Echokompensators, der für die Verarbeitung zeitdiskreter Signale vorgesehen ist und bei dem jeder der Koeffizienten einen Abtastwert der Impulsantwort des Echoweges darstellt, dadurch gekennzeichnet, daß die Maximalwerte dieser Koeffizienten mit zunehmender Echolaufzeit ($T_{Echo}$) in ihrer Amplitude entsprechend einer damit verbundenen größeren Kabeldämpfung (a) abgesenkt werden.

2. Verfahren nach Anspruch 1, dadurch gekennzeichnet, daß die Absenkung bei binärer Signalverarbeitung im Echokompensator in ganzzahligen, negativen Zweier-Potenzen vorgenommen wird.

## Claims

1. A method of representing the coefficients of an echo compensator which is provided for the processing of time-discrete signals and wherein each of the coefficients represents a sample value of the pulse response of the echo path, characterised in that with increasing echo transit time ($T_{Echo}$) the maximum values of these coefficients are reduced in their amplitude corresponding to an associated, greater cable attenuation (a).

2. A method as claimed in claim 1, characterised in that in binary signal processing in the echo compensator the reduction is effected in whole numbered, negative powers of two.

## Revendications

1. Procédé pour représenter les coefficients d'un suppresseur d'écho, qui est prévu pour le traitement de signaux discrets dans le temps et dans lequel chacun des coefficients représente une valeur d'exploration de la réponse impulsionnelle du trajet de l'écho, caractérisé par le fait que lorsque le temps de transit de l'écho ($T_{echo}$) augmente, l'amplitude des valeurs maximales de ces coefficients est réduite conformément à un affaiblissement supérieur (a), qui y est lié, dans un câble.

2. Procédé suivant la revendication 1, caractérisé par le fait que la réduction est réalisée selon des puissances paires et négatives de deux, dans le cas d'un traitement binaire des signaux dans le suppresseur d'écho.

FIG 1